**Europäisches Patentamt**

**European Patent Office**

**Office européen des brevets**

(19)

(11) Veröffentlichungsnummer: **0 023 484**
**B1**

# (12) EUROPÄISCHE PATENTSCHRIFT

(45) Veröffentlichungstag der Patentschrift:
**12.01.83**

(21) Anmeldenummer: **79900538.4**

(22) Anmeldetag: **31.05.79**

(86) Internationale Anmeldenummer:
**PCT/CH 79/00080**

(87) Internationale Veröffentlichungsnummer:
**WO 80/01660 (21.08.80 Gazette 80/19)**

(51) Int. Cl.³: **B 23 B 13/02,** B 23 B 7/06

(54) **STANGENFÖRMIGEN WERKSTOFF VERARBEITENDER DREHAUTOMAT.**

(30) Priorität: **08.02.79 CH 1248/79**

(43) Veröffentlichungstag der Anmeldung:
**11.02.81 Patentblatt 81/6**

(45) Bekanntmachung des Hinweises auf die Patenterteilung:
**12.01.83 Patentblatt 83/2**

(84) Benannte Vertragsstaaten:
**AT CH DE FR GB**

(56) Entgegenhaltungen:
**CH-A-608 399**
**DE-A-2 531 430**
**DE-C-726 276**
**FR-A-2 284 400**
**US-A-2 389 556**

(73) Patentinhaber: **TORNOS S.A. Fabrique de machines**
**Moutier, 111, rue Industrielle, CH-2740 Moutier (CH)**

(72) Erfinder: **AESCHBACHER, Gottfried, Cras Franchier,**
**CH-2800 Delémont/JU (CH)**

(74) Vertreter: **Egli, Johann et al, Bovard & Cie Patentanwälte**
**VSP - Rechtsanwälte Optingenstrasse 16,**
**CH-3000 Bern 25 (CH)**

## Stangenförmigen Werkstoff verarbeitender Drehautomat

Die Erfindung betrifft einen stangenförmigen Werkstoff verarbeitenden Drehautomaten, bei welchem auf einem Bett feststehend ein Ständer mit Materialstangenführungsbuchse, davor ein Satz von in Radialrichtung geführten Werkzeugen und dahinter ein längsbeweglich geführter Spindelstock angeordnet sind, wobei die im Spindelstock gelagerte, motorisch angetriebene Spindel mit einer Spannzange und mit Mitteln zu deren Öffnen und Schliessen ausgerüstet ist, bei welchem ferner eine Vorrichtung zur koordinierten Steuerung und Durchführung der Bewegungen der Werkzeuge, des Spindelstockes und der Spannzange zwecks selbsttätigen Fertigens von Werkstücken aus der in Bearbeitung begriffenen Materialstange in aufeinanderfolgenden, unter sich gleichen Arbeitsfolgen vorhanden ist.

Derartige Drehautomaten sind seit Jahrzehnten in den mannigfachsten Ausführungen im Gebrauch. Aus der Tatsache, dass sie alle nur mit einem einzigen, längsbeweglichen, von der jeweils in Bearbeitung begriffenen Materialstange durchsetzten Spindelstock ausgerüstet sind, ergeben sich gewichtige Nachteile.

Ein erster Nachteil, der sich besonders dann auswirkt, wenn ziemlich lange Werkstücke zu bearbeiten sind, besteht darin, dass ein letzter Teil des Arbeitszyklus, während welchem kein Werkzeug tätig ist, und während welchem die Materialstange in Axialrichtung stillgehalten werden muss, für die Rückführung des Spindelstockes von seiner vordersten in seine hinterste Endlage bereitgehalten werden muss. Die hierfür aufgewendete Zeit ist Totzeit und kann leicht 25% der totalen Zyklusdauer betragen.

Ein zweiter sehr gewichtiger Nachteil besteht darin, dass eine aufwendige Materialstangen-Vorschubvorrichtung vorgesehen sein muss, die zudem auch für den Ausstoss oder den Rückzug des Materialstangen-Reststückes eingerichtet sein muss. Diese Vorrichtung bedingt übrigens Ausbildungen der hinter dem Spindelstock angeordneten Materialstangenführung und der Werkstückspindel selbst, die einer guten radialen Lagerung der Materialstange abträglich sind, weshalb es nicht möglich ist, den Drehautomaten mit jenen hohen Spindeldrehzahlen bzw. Schneidgeschwindigkeiten arbeiten zu lassen, die an sich mit den heute zur Verfügung stehenden Hochqualitätswerkzeugen möglich wären.

Ein dritter Nachteil dieser Drehautomaten wenn Kurvensteuerung vorliegt, bezieht sich auf die Länge des zu drehenden Teiles. Diese wird durch Maschinenelemente beschränkt. Erstens muss der Spindelstock in seiner Führung verschiebbar sein und zweitens muss diese Bewegung von der Verschiebvorrichtung steuerbar sein. Sowohl die Länge der Führung, wie auch der nutzbare Radius der Steuerkurve resp. die Höhe der Glockenkurve, beschränken die Teilelänge.

Um längere Teile herzustellen, müsste also die Führung des Spindelstockes verlängert werden und die Aufnahme der Steuerkurven müsste so gebaut werden, dass grössere Kurven montiert werden können. Dies würde aber bedingen, dass die Kurvenwelle weiter weg von der Maschine angeordnet wird, was andere konstruktionsbedingte Nachteile mit sich bringen würde.

Die hervorgehobenen Nachteile wurden schon vor einiger Zeit erkannt und es wurden auch Teillösungen gefunden.

Die DE-C-726 276 beschreibt eine solche. Es handelt sich um die Weiterentwicklung eines gattungsmässigen Landdrehautomaten, bei welchem die Führungsbuchse so ausgebildet wurde, dass diese auch als Spannvorrichtung benützt werden kann. In diesem Fall wurde also eine zweite Spannvorrichtung vorgesehen, die aber axial feststeht und deren Zweck darin besteht, die zu verarbeitende Werkstoffstange während dem Abstechen festzuhalten. Ohne auf die dieser Lösung eigenen Nachteile einzugehen, sei hervorgehoben, dass diese Lösung die grundsächlichen Nachteile des gattungsmässigen Langdrehautomaten nur teilweise beseitigt. Diese Ausführung ermöglicht es dem Automaten, ohne Werkstoffstangen-Vorschubvorrichtung zu arbeiten. Auch kann die Totzeit, die für den Rücklauf des Spindelstockes benötigt wird, reduziert werden, aber bei weitem nicht vollständig. Der Grund hiefür ist in den Besonderheiten des Langdrehautomaten zu suchen. Dieser Drehautomatentyp wird besonders für längliche Werkstücke eingesetzt, also Teile, die eine kurze Abstechzeit benötigen in bezug auf die Zeit, die insgesamt für das Lösen der Spannzange, den Rücklauf des Spindelstockes und das Wiederspannen der Spannzange aufgewendet werden muss. Je länger das Werkstück, je länger die Zeit, die für den Rücklauf benötigt wird. Die durch Einsatz der Vorrichtung gemäss DE-C-726 276 zu gewinnende Produktionszeit ist gering, weil die Hilfsspannvorrichtung erst gespannt werden kann, wenn der Spindelstock sich in der Abstechposition befindet. Die Zange des Spindelstockes kann aber erst gelöst werden, wenn die Hilfszange die Funktion übernommen hat, und der Rücklauf kann erst beginnen, wenn die Zange gelöst ist, und bevor ein neues Teil bearbeitet werden kann, muss die Zange wieder gespannt werden, und danach die Hilfszange wieder gelöst werden.

Eine gattungsfremde Drehmaschine, die in der US-A-2 389 556 beschrieben ist, weist einen kontinuierlichen Werkstoffstangenvorschub auf; sie arbeitet mit umlaufenden Werkzeugen und feststehendem Werkstoff. Die Spannvorrichtungen sind also zwei einfache, hydraulisch betätigte Spannstöcke, die hintereinander auf dem gleichen Schlitten montiert sind und durch alternative Betätigung den kontinuierlichen Vorschub ermöglichen.

Der Erfindung liegt die Aufgabe zugrunde, für Drehautomaten der eingangs erwähnten Gattung eine Ausbildung zu schaffen durch welche die oben angeführten Nachteile beseitigt werden. Die Lösung dieser Aufgabe wird erfindungsgemäss darin gesehen, dass auf dem Bett hinter dem besagten ersten Spindelstock ein zweiter Spindelstock auch längsbeweglich angeordnet ist, dessen Spindel um die gleiche geometrische Achse dreht wie diejenige des ersten Spindelstockes und auch mit einer Spannzange und Mitteln zum Öffnen und Schliessen derselben ausgerüstet ist, und dass besagte Vorrichtung auch auf den zweiten Spindelstock und die Mittel zum Öffnen und Schliessen dessen Spannzange derart einwirken, dass währenddem aus der in der Spindel des ersten Spindelstockes eingespannten Materialstange ein erstes Werkstück oder ein erster Teil eines ersten Werkstückes gefertigt wird, unter schrittweiser Vorverschiebung dieses Spindelstockes aus seiner Ausgangslage, zugleich der zweite Spindelstock in seine Ausgangslage zurückverschoben wird, wogegen nachfolgend aus der nun in der Spindel des zweiten Spindelstockes eingespannten Materialstange ein zweites Werkstück oder ein zweiter Teil des ersten Werkstückes gefertigt wird unter schrittweiser Vorverschiebung des zweiten Spindelstockes und zugleich der erste Spindelstock in seine Ausgangslage zurückverschoben wird, wobei in den Übergangsphasen die Materialstange sowohl in der Spindel des ersten wie auch des zweiten Spindelstockes festgespannt ist.

Es leuchtet ein, dass bei solcher Ausbildung – der erste der oben erwähnten Hauptnachteile dahinfällt, weil stets der eine der beiden Spindelstöcke (bei geöffneter zugehöriger Spannzange) in seine Ausgangslage zurückgeführt werden kann währenddem der andere Spindelstock samt zugehöriger Spannzange wirksam ist, wobei natürlich die Wirkzeiten der beiden Spindelstöcke sozusagen nahtlos ineinander übergehen können; die in bezug auf die DE-C-726 276 angeführten Beschränkungen des Zeitgewinnes gelten nicht, weil in der erfindungsgemässen Ausbildung alle Bewegungen des nicht produzierenden Spindelstokkes während dem Arbeiten des anderen Spindelstockes ausgeführt werden können, einschliesslich Spannen und Lösen der Spannzangen;

– die Materialstange während ihrer ganzen Verarbeitung in keinem Zeitpunkt von den Spannzangen beider Spindelstöcke freigegeben ist, woraus sich ergibt, dass die Kombination beider Spindelstöcke samt deren Spannzangen anstelle der bisher stets vorzusehenden Stangenvorschubvorrichtung den Stangenvorschub allein übernehmen kann, und zwar inklusive Ausstoss des sich jeweils ergebenden Stangenreststückes nach vorn durch die nachfolgende Materialstange. Bei Wegfall der Stangenvorschubvorrichtung kann somit die hinter dem Drehautomaten angeordnete Stangenführungsvorrichtung optimal, und trotzdem beträchtlich vereinfacht, zur Ausfüllung ihrer Aufgabe ausgebildet werden, was erhebliche Lärmverminderung und auch erheblich gesteigerte Drehzahl ermöglicht; in letzterer Hinsicht ist auch von Bedeutung, dass auch die Spindeln selbst (inkl. deren Spannzangen) auf dem grössten Teil ihrer Länge zur einwandfreien Führung der Materialstange herangezogen werden können;

– der Vorschub der beiden Spindelstöcke kombiniert werden kann, um dadurch die doppelte Teillänge zu erreichen. Trotzdem werden die Vorteile in bezug auf die Leistung beibehalten, denn während der Bearbeitung der zweiten Teilehälfte kann der nicht benötigte Spindelstock in die Ausgangsstellung zurückfahren.

Die Erfindung wird nachfolgend anhand beiliegender Zeichnung beispielsweise erläutert. Es zeigen:

Fig. 1A eine schematisierte perspektivische Ansicht mit Teilschnitt durch einen der Spindelstöcke,

Fig. 1B ein sehr vereinfachtes Schema einer zugehörigen Steuerungseinrichtung,

Fig. 1C einen schematisierten Längsschnitt einer der Spindelstöcke,

Fig. 2A und 2B Zeitdiagramme der Materialstangen- bzw. Spindelstockvorschübe F, die vorzunehmen sind bei der aufeinanderfolgenden Bearbeitung zweier identischer Werkstücke während den Zyklusdauern T, und zwar Fig. 2A für vorbekannte Bauarten und Fig. 2B für die erfindungsgemässe Bauart,

die Fig. 3A und 3B Zeitdiagramme der Materialstangen- bzw. Spindelstockvorschübe F, die vorzunehmen sind bei Bearbeitung eines anderen Werkstückes während der Zyklusdauer T.

Es sei gleich vorausgeschickt, dass sich für die bauliche Ausgestaltung des Drehautomaten und seiner Steuerung die vielfältigsten Möglichkeiten anbieten, was den Fachleuten auf dem einschlägigen Gebiet der Technik unzweifelhaft einleuchtet. In diesem Sinne sei vermerkt, dass die Steuerung nicht nur der Spindelstock- bzw. Materialstangenvorschübe F, sondern auch anderer Tätigkeiten, z.B. die Radialbewegungen der Schneidermeissel und eventueller sonstiger Werkzeuge sowie die Öffnungen und Schliessungen der Spannzangen.

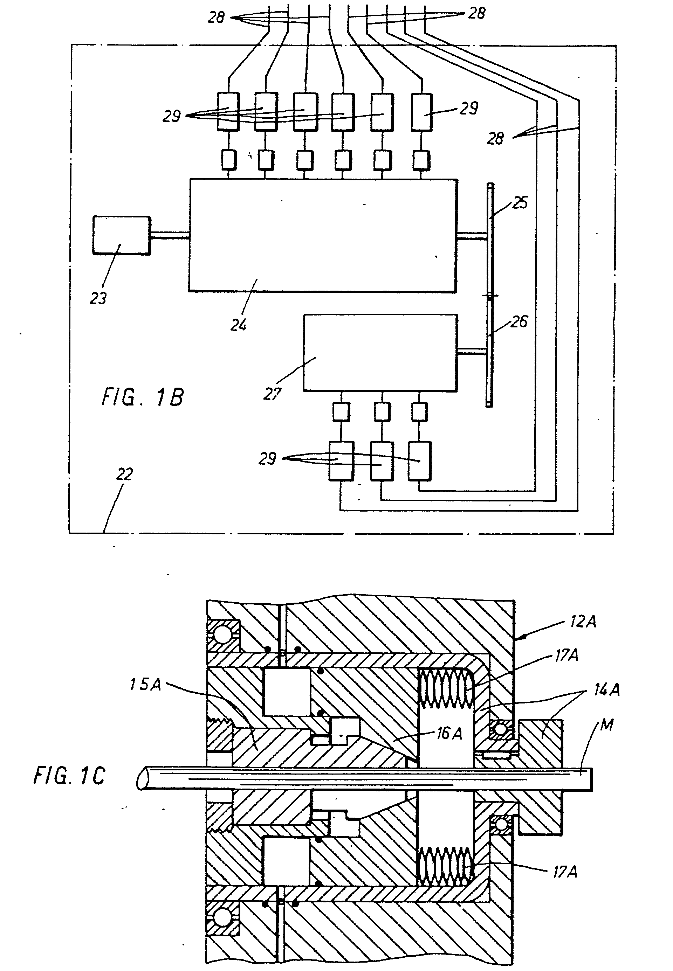

a) in althergebrachter Weise durch auf einer Steuerwelle oder auf mehreren antriebsverbundenen Steuerwellen sitzende Kurvenscheiben gesteuert sein könnten, die über rein mechanische Mittel wie Hebel, Stössel und dergleichen auf die zu steuerenden Teile einwirken, oder

b) etwa so wie in Fig. 1B in stark vereinfachter Weise dargestellt durch ein Steuergerät gesteuert sein könnten, das in ebenfalls althergebrachter Weise Steuertrommeln mit auswechselbaren und/oder einstellbaren Schaltnocken oder dergleichen aufweist, die über elektrische, hydraulische oder pneumatische Kreise mit Schaltern, Schützen, Ventilen, Magneten, Kolben usw. wirken,

c) numerisch (NC–) oder computer-numerisch (CNC–) gesteuert sein könnten, so wie dies heute bereits bei Drehmaschinen und sonstigen Werkzeugmaschinen in vielfältigster Weise getan wird. Als einziges Beispiel unter vielen anderen für eine derartige Steuerung der Spindelstockbewegungen und der Meisseltragschlittenbewegungen sei auf die CH-A 584 575 bzw. die ihr entsprechende FR-A 2 275 267 hingewiesen.

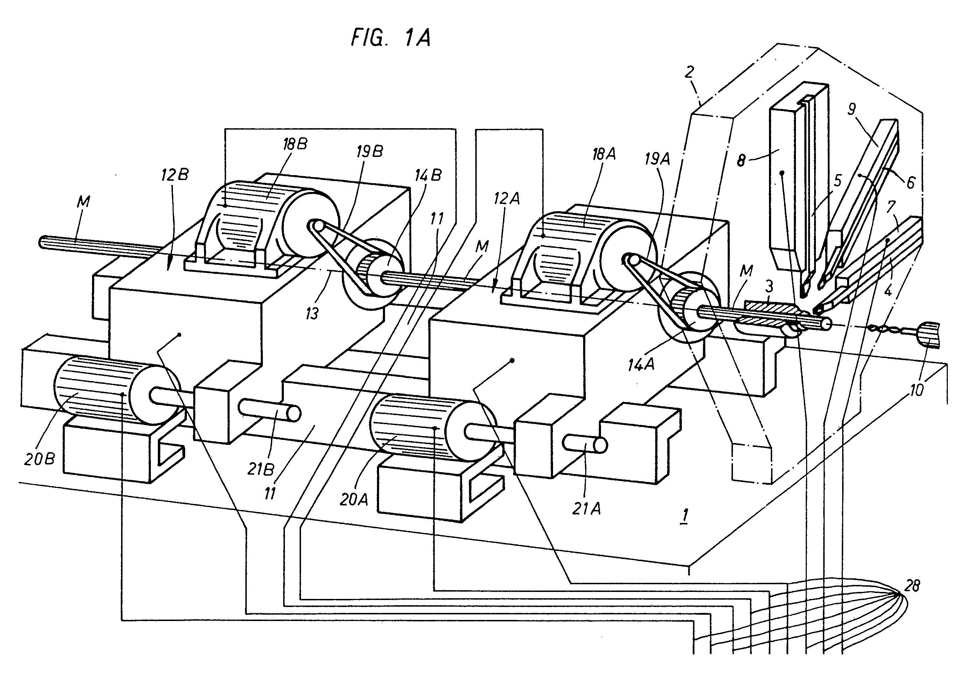

Weil es also auf die konstruktiven Einzelheiten in keiner Weise ankommt, zeigen die Fig. 1A, 1B und 1C den Aufbau weitgehend vereinfacht und schematisiert.

Auf einem Bett 1 des Drehautomaten ist feststehend ein Ständer 2 mit Materialstangenführungsbuchse 3 aufgebaut. Davor befindet sich ein Satz von z.B. fächerartig angeordneten Werkzeugen (Meisseln) wie 4, 5, 6 samt den zugehörigen Tragschlitten 7, 8 bzw. 9 (und zugehörigen Betätigungsvorrichtungen), deren Führungen z.B. an dem Ständer 2 vorgesehen sein können. Es kann auch ein Zusatzapparat 10 für Axial- oder Querbohrarbeiten oder Fräs- oder sonstige Zusatzbearbeitungen wie üblich vorgesehen sein.

Hinter dem Ständer 2 sind auf dem Bett 1 Längsführungen 11 vorgesehen, an denen – anstatt wie bisher nur ein einziger – nunmehr zwei in Abstand hintereinander gelegene Spindelstöcke 12A, 12B längsbeweglich, also in Richtung der Hauptachse 13 des Drehautomaten und der in Bearbeitung begriffenen Materialstange M beweglich geführt sind. Die diesen Spindelstöcken zugehörigen oder zugeordneten Teile sind, soweit dargestellt, mit Bezugszeichen versehen, denen der Buchstabe A oder B angehängt ist. Im Schnitt des Spindelstockes 12A erkennt man die drehbar, aber unverschiebbar gelagerte Spindel 14A, eine in dieser festgehaltene, über einem Teil ihrer Länge längsgeschlitzte und aussen kegelige Spannzange 15A, einen in der Spindel verschiebbaren Teil 16A ein Spannzangenöffnungs- und Schliessmechanismus. (Dieser Teil ist als Ringkolben dargestellt, der von links nach rechts durch Drucköl oder -luft bewegbar ist entgegen dem Widerstand eines Tellerfederpaketes 17A zum Öffnen der Spannzange 15A.) Zu jedem Spindelstock 12A, 12B gehört ein elektrischer Spindelantriebsmotor 18A bzw. 18B. Diese Motoren können je nach Bedarf gleich oder unterschiedlich ausgebildet sein, z.B. drehzahlverstellbar, als Brems- oder Stoppmotor, als Schrittschaltmotor; es können auch mechanische oder elektrische Mittel zur Gewährleistung ihres mindestens zeitweisen Synchronlaufes vorgesehen sein.

Als Antriebsverbindung jedes dieser Motoren 18A, 18B mit der zugehörigen Spindel 14A bzw. 14B ist ein Riemengetriebe 19A bzw. 19B vorgesehen.

Jedem Spindelstock ist als Mittel zur Herbeiführung seiner Längsbewegungen ein elektrischer Motor 20A, 20B zugeordnet, der auf dem Bett 1 festsitzt und dessen Gewindespindel 21A bzw. 21B mit einem seitlichen Auge des betreffenden Spindelstockes in Eingriff steht (vgl. auch die CH-A 584 575). Wie schon angetönt, könnte anstattdessen jedes andere geeignete Mittel vorgesehen sein.

In der in höchstem Mass vereinfachten Darstellung der (z.B. in einem separaten Steuerpult untergebrachten) Steuervorrichtung 22 in Fig. 1B ist angenommen, dass ein Schrittschaltmotor 23 eine erste Steuertrommel 24 und über ein Zahnradpaar 25, 26 mit Übersetzungsverhältnis 1:1 oder 1:2 eine zweite Steuertrommel 27 antreibe, wobei die Nocken der Trommeln am Umfang verstellbar und in ihrer Länge veränderbar sind. Sie betätigen Kontakte in Steuerverbindungen 28, in denen je nach Bedarf Elektroschütze, Elektroventile u.s.w. angeordnet sind, wie bei 29 angedeutet.

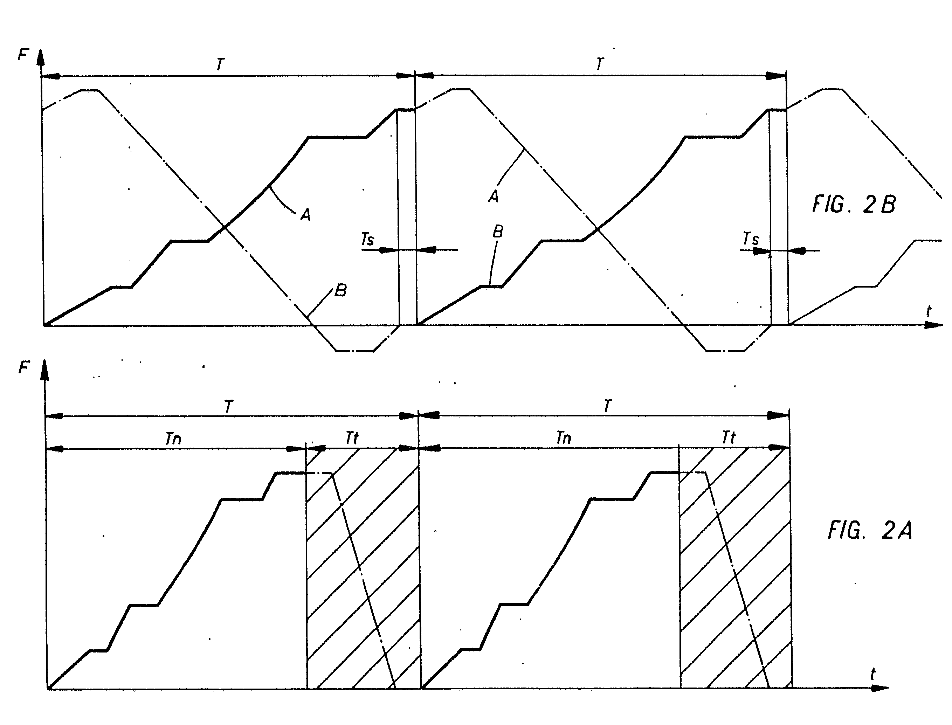

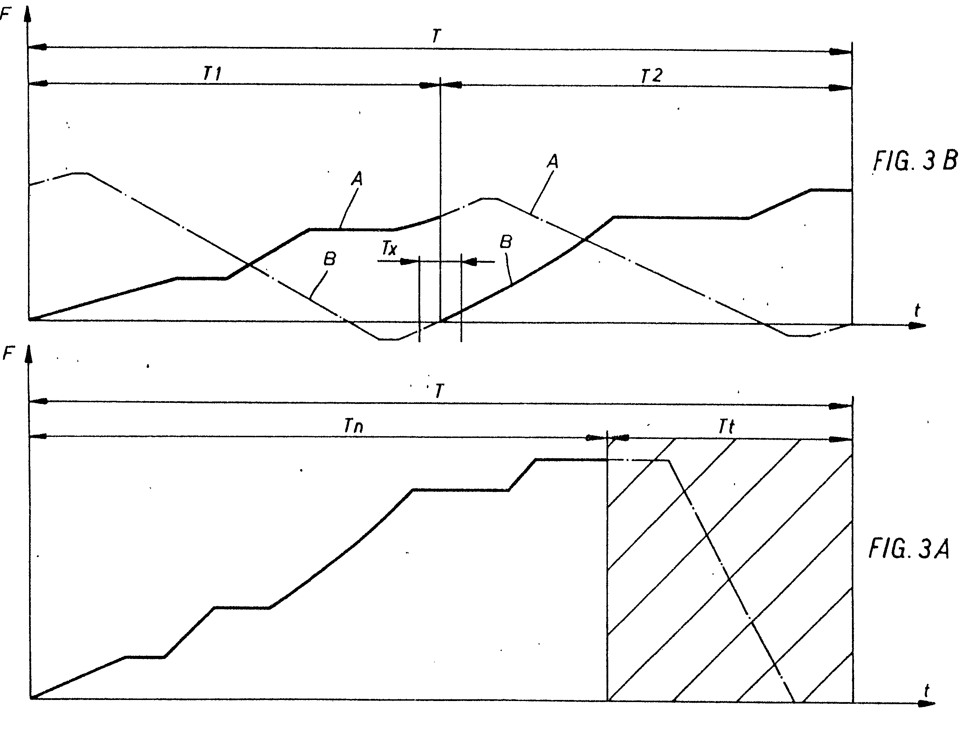

Anhand der Fig. 2A, 2B, 3A, 3B sei nun der wesentliche Unterschied der Arbeitsweise der erfindungsgemässen Ausbildung mit zwei Spindelstöcken gegenüber der herkömmlichen mit nur einem Spindelstock erläutert.

Nach den Fig. 2A und 2B werden während zwei sich je über die Zeitspanne T erstreckenden, aneinander anschliessenden Arbeitszyklen zwei gleiche Werkstücke bearbeitet. Bei nur einem Spindelstock (Fig. 2A) müssen die Spindelstock- und Stangenvorschübe F in der Nutzzeit $T_n$ durchgeführt werden, weil für die Rückführung des Spindelstockes in seine Ausgangslage (bei nicht gespannter Materialstange) eine Totzeit $T_t$ reserviert bleiben muss. Bei zwei Spindelstöcken (denen die Kurvenzüge A bzw. B) zugeordnet sind, Fig. 2B) erstreckt sich die Nutzzeit jeweils über die volle Zyklusdauer, weil im ersten Zyklus die Materialstange M durch den Spindelstock 12A vorgeschoben wird (währenddem zugleich der Spindelstock 12B in seine Ausgangslage zurückkehrt); im zweitem Zyklus wird die Materialstange M in gleicher Weise durch den Spindelstock 12B vorgeschoben (währenddem zugleich der Spindelstock 12A in seine Ausgangslage zurückkehrt).Es ist zu beachten, dass während einer kurzen Zeitspanne $T_s$ am Ende jedes Zyklus (während welcher vorzugsweise beide Spindelstöcke stillstehen), die Materialstange M in beiden Spindelstöcken festgespannt ist, damit – wie schon gesagt – die Kombination der beiden Spindelstöcke die Stangenvorschubvorrichtung ersetzen kann und auch damit nicht ein anfänglicher Vorschub «gegen Anschlag» zu erfolgen hat.

Nach den Fig. 3A und 3B wird in der Ablaufzeit T eines Zyklus ein Werkstück bearbeitet. Bei nur einem Spindelstock (Fig. 3A) steht wieder für die eigentliche Bearbeitung die Nutzzeit $T_n$ zur Verfügung und muss für die Rückführung des Spindelstockes (bei nicht gespannter Materialstange) eine Totzeit $T_t$ reserviert bleiben. Bei zwei Spindelstöcken hingegen übernimmt während der Zyklusteilzeit $T_1$ der Spindelstock 12A den Materialstangenvorschub (währenddem zugleich der Spindelstock 12B in seine Ausgangslage zurückgeführt wird), und übernimmt während der Zykluszeit $T_2$ (wobei $T_2$ gleich oder ungleich $T_1$ sein kann) den weiteren Vorschub der Materialstange (währenddem der Spindelstock 12A in seine Ausgangslage zurückgeführt wird). In den sich je über die kurze Zeitspanne $T_x$ erstreckenden Übergangsphasen aufeinanderfolgender Teilzyklen ist auch in diesem Fall die Materialstange in beiden Spindelstöcken festgespannt. Der Unterschied zur Betriebsweise nach Fig. 2B besteht eigentlich nur darin, dass dort die Vorschubkurven für die beiden Spindelstöcke unter sich gleich sind, hier jedoch voneinander abweichen (ähnliches gilt auch für die Vorschubkurven der Werkzeuge).

Die Arbeitsweise nach Fig. 3B eignet sich besonders für die Fertigung besonders langer Werkstücke, weil der hiefür erforderliche Materialstangenvorschub auf beide Spindelstöcke verteilt werden kann. Falls die Spindelstockvorschübe durch Kurvenscheiben gesteuert werden, so ist dann auch die der Werkstücklänge entsprechende Summe der Kurvenerhebungen auf die beiden Kurvenscheiben verteilt.

Bei Kurvenscheibensteuerung ist in beiden Bearbeitungsfällen die Steilheit der Kurvenabschnitte vermindert, insbesondere die Steilheit des bzw. derjenigen Kurvenabschnitte, welche die Rückführung des bzw. der Spindelstöcke steuert bzw. steuern.

## Patentanspruch

Stangenförmigen Werkstoff verarbeitender Drehautomat, bei welchem auf einem Bett (1) feststehend ein Ständer (2) mit Materialstangenführungsbuchse (3), davor ein Satz von in Radialrichtung geführten Werkzeugen (4, 5, 6) und dahinter ein längsbeweglich geführter Spindelstock (12A) angeordnet sind, wobei die im Spindelstock gelagerte, motorisch angetriebene Spindel (14A) mit einer Spannzange (15A) und mit Mitteln (16A, 17A) zu deren Öffnen und Schliessen ausgerüstet ist, bei welchem ferner eine Vorrichtung (22) zur koordinierten Steuerung und Durchführung der Bewegungen der Werkzeuge, des Spindelstockes und der Spannzange zwecks selbsttätigen Fertigens von Werkstücken aus der in Bearbeitung begriffenen Materialstange in aufeinanderfolgenden, unter sich gleichen Arbeitsfolgen vorhanden ist, dadurch gekennzeichnet, dass auf dem Bett hinter dem besagten ersten Spindelstock (12A) ein · zweiter Spindelstock (12B) auch längsbeweglich angeordnet ist, dessen Spindel um die gleiche geometrische Achse dreht wie diejenige des ersten Spindelstockes und auch mit einer Spannzange und Mitteln zum Öffnen und Schliessen derselben ausgerüstet ist, und dass besagte Vorrichtung (22) auch auf den zweiten Spindelstock und die Mittel zum Öffnen und Schliessen dessen Spannzange derart einwirkt, dass währenddem aus der in der Spindel des ersten Spindelstockes eingespannten Materialstange ein erstes Werkstück oder ein erster Teil eines ersten Werkstückes gefertigt wird, unter schrittweiser Vorverschiebung dieses Spindelstockes aus seiner Ausgangslage, zugleich der zweite Spindelstock in seine Ausgangslage zurückverschoben wird, wogegen nachfolgend aus der nun in der Spindel des zweiten Spindelstockes eingespannten Materialstange ein zweites Werkstück oder ein zweiter Teil des ersten Werkstückes gefertigt wird unter schrittweiser Vorverschiebung des zweiten Spindelstockes und zugleich der erste Spindelstock in seine Ausgangslage zurückverschoben wird, wobei in den Übergangsphasen die Materialstange sowohl in der Spindel des ersten wie auch des zweiten Spindelstockes festgespannt ist.

## Revendication

Tour automatique usinant de la matière en barres, comportant un bâti (1) sur lequel est agencé un support (2) muni d'un canon de guidage (3), le support portant à l'avant un jeu d'outils radiaux (4, 5, 6), derrière le support est agencé une poupée mobile axialement (12A) comportant une broche (14A) entraînée par un moteur, cette broche étant munie d'une pince de serrage (15A) et de moyens (16A, 17A) pour serrer et desserrer la pince, ce tour comportant d'autre part un dispositif (22) pour commander et faire effectuer d'une manière coordonnée les mouvements d'outils de la poupée et de la pince de serrage en vue de l'usinage automatique de pièces à partir de la barre de matière par une série de cycles d'usinages identiques, caractérisé par le fait que sur le bâti, derrière la dite première poupée (12A) est agencé une deuxiéme poupée (12B) également mobile axialement et dont la broche tourne autour du même axe géométrique que la broche de la première poupée et qui est également munie d'une pince de serrage et de moyens pour serrer et desserrer la pince, et que le dit dispositif (22) agit également sur la deuxième poupée et ses moyens pour serrer et desserrer la pince; de manière à ce que pendant l'usinage d'une première pièce, ou d'une première portion de pièce, dans la barre serrée dans la première poupée qui avance pas-à-pas, la deuxième poupée est reculée à sont point de départ, alors que dans le cycle suivant une deuxième pièce, ou une deuxième portion de pièce, est usinée dans la barre de matière serrée maintenant dans la broche de la deuxième poupée qui avance pas-à-pas alors qu'en même temps la première poupèe est reculée dans sa position de départ, lors, dans les phases intermédiaires, la barre de matière est serrée aussi bien dans la broche de la première que de la deuxième poupée.

## Claim

Automatic lathe for processing bar-shaped material, wherein a column (2) with bar-stock guide bush (3) is disposed stationary on a bed (1), in front of it a set of radially guided tools (4, 5, 6) and behind it a headstock (12) guided for longitudinal movement are disposed, the motor-driven spindle (14A) mounted in the headstock being equipped with a chuck (15A) and with means (16A, 17A) for opening and closing thereof, wherein there is further a device (22) for coordinated control and execution of the movements of the tools, of the headstock, and of the chuck for the purpose of automatic manufacture of workpieces from the bar stock being machined in successive, identical sequences of operation, characterized in that on the bed behind the said first headstock (12A) there is disposed, also longitudinally movably, a second headstock (12B), the spindle of which rotates about the same geometric axis as that of the first headstock and is also equipped with a chuck and means for opening and closing thereof, and that said device (22) also acts upon the second headstock and the means for opening and closing the spindle thereof in such a way that while a first workpiece or a first part of a first workpiece is being made from the bar stock chucked in the spindle of the first headstock, with step-by-step forward displacement of this headstock from its starting position, the second headstock is simultaneously being displaced back into its starting position, whereas thereafter a second workpiece or a second part of the first workpiece is made from the bar stock now chucked in the spindle of the second headstock, with step-by-step forward displacement of the second headstock, and the first headstock is simultaneously displaced back into its starting position, the bar stock being clamped in the spindle of the first headstock as well of the second headstock during the transitional phases.

FIG. 1A

2/4

28 — 28

29 — 29

28

25

23

24

26

27

29

22

FIG. 1B

FIG. 1C

12A

17A

15A

14A

16A

M

17A

FIG. 2B

FIG. 2A

FIG. 3 B

FIG. 3 A

0 023 484